# EUROPÄISCHE PATENTANMELDUNG

(11) **EP 3 228 492 A1**
(43) Veröffentlichungstag der Anmeldung: **11.10.2017**
(21) Anmeldenummer: 17164833.0
(22) Anmeldetag: 04.04.2017
(51) Int. Cl.: B60M 1/30, B60M 7/00, B66C 13/00, B66F 9/00, B60L 5/38

(54) **ENERGIEZUFÜHRUNG FÜR EINE UMSCHLAGMASCHINE**

(30) Priorität: 05.04.2016 DE 102016106205
(71) Anmelder: Stemmann-Technik GmbH, 48465 Schüttorf (DE)
(72) Erfinder: Möller, Christoph, 48488 Emsbüren (DE)
(74) Vertreter: Griepenstroh, Jörg

(57) **Zusammenfassung**

Energiezuführung für eine elektrisch angetriebene, leitunggebundene Umschlagmaschine (2) mit folgenden Merkmalen:
a. Die Energiezuführung (1) ist dafür ausgebildet, oberhalb einer Umschlagmaschine (2) montiert zu werden;
b. Die Energiezuführung (1) umfasst wenigstens eine Stromschiene (4) und einen entlang der Stromschiene (4) verfahrbaren Stromabnehmerwagen (6), der so angeordnet und dazu ausgebildet ist, dass er einer örtlichen Verlagerung der Umschlagmaschine (2) folgen kann;
c. Der Stromabnehmerwagen (6) ist über eine Leitung (3) und ein Zugmittel (12) mit einem Schleifringträger (9) verbunden, wobei der Schleifringträger (9) dafür vorgesehen ist, an der Umschlagmaschine (2) befestigt zu werden, um die Umschlagmaschine (2) mit Energie aus der Stromschiene (4) zu versorgen;
d. Der Stromabnehmerwagen (6) besitzt einen Antrieb (19), der dafür vorgesehen ist, den Stromabnehmerwagen (6) zu verlagern,
i. bei Unterschreiten eines unteren Grenzwertes einer Zugkraft an dem Zugmittel (12) und bei Überschreiten eines oberen Grenzwertes der Zugkraft an dem Zugmittel (12)
ii. oder bei Überschreiten einer horizontalen Auslenkung des Zugmittels (12);

e. Der Schleifringträger (9) ist an einem Turm (8) an einem Oberwagen (10) der Umschlagmaschine (2) befestigt, wobei der Oberwagen (10) der Umschlagmaschine (2) drehbar an einem Fahrgestell (11) der Umschlagmaschine (2) angeordnet ist.

## Beschreibung

Die Erfindung betrifft eine Energiezuführung für eine Umschlagmaschine mit den Merkmalen des Patentanspruchs 1.

Umschlagmaschinen, die auch als Bagger oder Lademaschine bezeichnet werden können, sind für den rationellen Umschlag von Massengütern vorgesehen. Normalerweise werden Räder oder Raupen gebundene Elektroumschlagmaschinen, die in Hallen oder auf Außengeländen operieren, über eine Leitungstrommel, die auf der Umschlagmaschine angeordnet ist und beim Verfahren der Umschlagmaschine eine Leitung synchron zum Fahrantrieb der Umschlagmaschine abspult, mit Energie versorgt. Es besteht die latente Gefahr, dass die bodenseitige Versorgungsleitung durch die Maschine selbst, die Leitung kreuzende LKW oder Flurförderfahrzeuge beschädigt wird.

Hiervon ausgehend liegt der Erfindung die Aufgabe zugrunde, eine Energiezuführung für eine elektrisch angetriebene leitunggebundene Umschlagmaschine vor derartigen Beschädigungen zu schützen.

Diese Aufgabe ist durch eine Energiezuführung für eine solche Umschlagmaschine gemäß den Merkmalen des Patentanspruchs 1 gelöst.

Vorteilhafte Weiterbildungen der Erfindung sind Gegenstand der Unteransprüche.

Die Energiezuführung für eine elektrisch angetriebene, leitunggebundene Umschlagmaschine umfasst folgende Merkmale:
a. Die Energiezuführung ist dafür ausgebildet, oberhalb einer Umschlagmaschine montiert zu werden;
b. Die Energiezuführung umfasst wenigstens eine Stromschiene und einen entlang der Stromschiene verfahrbaren Stromabnehmerwagen, der so angeordnet und dazu ausgebildet ist, dass er einer örtlichen Verlagerung der Umschlagmaschine folgen kann;
c. Der Stromabnehmerwagen ist über eine Leitung und ein Zugmittel mit einem Schleifringträger verbunden, wobei der Schleifringträger dafür vorgesehen ist, an der Umschlagmaschine befestigt zu werden, um die Umschlagmaschine mit Energie aus der Stromschiene zu versorgen;
d. Der Stromabnehmerwagen besitzt einen Antrieb, der dafür vorgesehen ist, den Stromabnehmerwagen zu verlagern,
   i. bei Unterschreiten eines unteren Grenzwertes einer Zugkraft an dem Zugmittel und bei Überschreiten eines oberen Grenzwertes der Zugkraft an dem Zugmittel
   ii. oder bei Überschreiten einer horizontalen Auslenkung des Zugmittels;
e. Der Schleifringträger ist an einem Turm an einem Oberwagen der Umschlagmaschine befestigt, wobei der Oberwagen der Umschlagmaschine drehbar an einem Fahrgestell der Umschlagmaschine angeordnet ist.

Der Kern der Erfindung ist, dass die Energiezuführung dafür ausgebildet ist, oberhalb der Umschlagmaschine montiert zu werden. Oberhalb der Umschlagmaschine bedeutet, dass die gesamte Energiezuführung nicht über den Boden sondern oberhalb der Umschlagmaschine erfolgt. Eine bodenseitige Leitung entfällt. Das Risiko, eine bodenseitige Leitung zu beschädigen, besteht nicht mehr.

Die Energiezuführung umfasst eine Stromschiene und einen entlang der Stromschiene verfahrbaren Stromabnehmerwagen, der so angeordnet und dazu ausgebildet ist, dass er einer örtlichen Verlagerung der Umschlagmaschine folgen kann. Hierbei wird davon ausgegangen, dass die Umschlagmaschine in einen örtlich begrenzten Wirkungsbereich zum Einsatz kommt, so dass die Stromschiene nur eine begrenzte Länge haben muss. Die Umschlagmaschine bewegt sich typischerweise entlang einer Hauptverlagerungsachse und in kleinerem Umfang auch noch quer zur Hauptverlagerungsachse. Dieser Bewegungsbereich, der oftmals ein langer schmaler Streifen ist, und sich zum Beispiel in Längsrichtung einer Halle erstreckt, muss über die Energiezuführung abgedeckt werden. Hierzu ist von dem Stromabnehmerwagen eine Leitung zu einem Schleifringträger geführt, der dafür vorgesehen ist, an der Umschlagmaschine befestigt zu werden, um die Umschlagmaschine mit Energie aus der Stromschiene zu versorgen. Parallel zu der Leitung ist ein Zugmittel mit dem Schleifringträger verbunden. Die Leitung zwischen Stromabnehmerwagen und Schleifringträger wird über das Zugmittel entlastet und kann dementsprechend schlaffer sein, da die Verbindung zwischen Stromabnehmerwagen und Schleifringträger über das Zugmittel gegeben ist.

Erfindungsgemäß ist vorgesehen, dass der Stromabnehmerwagen einen Antrieb besitzt, der dafür vorgesehen ist, den Stromabnehmerwagen zu verlagern. Die Verlagerung erfolgt gesteuert. Wird ein unterer Grenzwert einer Zugkraft an dem Zugmittel unterschritten oder ein oberer Grenzwert der Zugkraft an dem Zugmittel überschritten, wird der Antrieb so angesteuert, so dass die Grenzwerte eingehalten werden. Alternativ kann vorgesehen sein, dass bei Überschreiten einer horizontalen Auslenkung des Zugmittels der Antrieb des Stromabnehmerwagens aktiviert wird und der Stromabnehmerwagen in solche Position verlagert wird, dass sich die horizontale Auslenkung des Zugmittels in vorgegebenen Grenzwertbereichen bewegt. Die Zugkraft und/oder die horizontale Auslenkung des Zugmittels sind die zu messenden Parameter, über welche der Antrieb gesteuert wird.

Die Erfindung berücksichtigt daher zwei unterschiedliche Ausführungsformen, nämlich einmal eine Konstellation, bei welcher es lediglich auf die Zugkraft am Zugmittel ankommt, um den Antrieb anzusteuern. In diesem Fall kann das Zugmittel einen beliebigen Winkel relativ zum Stromabnehmerwagen einnehmen. Das heißt der Stromabnehmerwagen kann auch in größerem Abstand vom Schleifringträger angeordnet sein, so dass das Zugmittel nahezu horizontal ausgerichtet ist, wobei unter nahezu horizontal auch ein Winkelbereich kleiner als 5° zur Horizontalen zu verstehen ist. Die Umschlagmaschine mit dem Schleifringträger kann sich daher auch etwas seitlich der Stromschiene befinden. Das Zugmittel sollte in Horizontalrichtung betrachtet nicht mehr als +/- 45° von der Bewegungsrichtung des Stromabnehmerwagens abweichen.

Der Schleifringträger ist an einem Turm an einem Oberwagen der Umschlagmaschine befestigt. Der Oberwagen der Umschlagmaschine ist drehbar an einem Fahrgestell der Umschlagmaschine angeordnet. Die Schleifringträger gleichen die Drehbewegungen des Oberwagens relativ zur Leitung und relativ zum Zugmittel aus. Der Turm mit dem Schleifringträger ist insbesondere so hoch, dass es keine Kollisionsgefahr zwischen einem Ausleger einer Umschlagmaschine und dem Zugseil bzw. der Leitung gibt. Der Schleifringträger besitzt eine Drehachse, die vorzugsweise identisch zur Drehachse des Oberwagens gegenüber dem Fahrgestell der Umschlagmaschine ist.

Der Stromabnehmerwagen selbst ist nicht an der Stromschiene, sondern bevorzugt an einer separaten Tragschiene geführt, die parallel zur Stromschiene verläuft. Bei der Tragschiene kann es sich beispielsweise um ein Doppel-T-Profil handeln.

In einer ersten Ausführungsform der Erfindung ist das Zugmittel um ein mehrfaches länger als der kleinste Abstand des Schleifringträgers von der Stromschiene, bzw. der Trägerschiene so dass der Stromabnehmerwagen in jeder Betriebsposition in horizontalem Abstand von dem Schleifringträger angeordnet ist. Beispielsweise kann der vertikale Abstand des Schleifringträgers von der Stromschiene bzw. der Tragschiene 500 mm betragen, während der Abstand des Schleifringträgers von dem Stromabnehmerwagen 8 m beträgt. Dadurch ist der Stromabnehmer immer in einem größeren Abstand von der Umschlagmaschine angeordnet. Selbst wenn bei einer solchen Anordnung die Mitte der Umschlagmaschine um ca. 30° nach links oder rechts von dem Verlauf der Tragschiene bzw. der Stromschiene abweicht, ergibt dies nur eine seitliche Abweichung von -/+ 4 m. Der Bewegungsspielraum der Umschlagmaschine wird erheblich vergrößert, nämlich insgesamt um 8 m. Gleichzeitig halten sich die auf dem Stromabnehmerwagen wirkenden Querkräfte in Grenzen (sin30°=0,5).

In einer zweiten Ausführungsform ist vorgesehen, dass die Tragschiene für den Stromabnehmerwagen quer zu den Längsschienen verläuft, entlang welcher die Tragschienen zusammen mit dem Stromabnehmerwagen durch wenigstens eine angetriebene Laufkatze verlagerbar sind. Eine solche Anordnung ist mit einem Deckenkran vergleichbar, der ebenfalls an Längsschienen geführt ist, aber eine Laufkatze besitzt, die an einer Tragschiene bzw. Kranbrücke quer zu den Längsschienen verlagerbar ist, so dass ein kompletter rechteckiger Bereich von den Längsschienen und der Tragschiene abgedeckt ist. Die Laufkatze dazu, den Stromabnehmerwagen in der richtigen Position relativ zur Umschlagmaschine zu halten, um entweder das Zugmittel in der richtigen Vorspannung zu halten oder aber in der richtigen Position relativ zur Umschlagmaschine.

Unabhängig davon, ob der Stromabnehmerwagen über ein relativ langes Zugmittel im Abstand zum Schleifringträger der Umschlagmaschine folgen soll oder aber unmittelbar in der Nähe der Umschlagmaschine angeordnet sein soll und zwar derart, dass das Zugmittel gewissermaßen senkrecht über dem Schleifringträger steht, ist es erforderlich, die Antriebe für den Stromabnehmerwagen oder eine zusätzlich angetriebene Laufkatze beim Traversenbetrieb mit entsprechenden Steuersignalen zu versorgen.

Hierzu sind am Stromabnehmerwagen entweder Mittel zur Erfassung der horizontalen Auslenkung des Zugmittels angeordnet oder Mittel zur Erfassung der Zugkraft. Zugkräfte können elastische Verformungen mit Wegmessung oder mit Widerstandsmessung oder auch magnetisch oder piezoelektrisch gemessen werden. Messmittel und Wirkprinzipien sind einem Fachmann bekannt. Aus der Zugkraftmessung lassen sich elektrische Signale generieren, die eine Antriebsmaschine ansteuern und den Stromabnehmerwagen in eine Position bringen, in der bestimmte Zugkräfte nicht über-oder unterschritten werden.

Soll der Stromabnehmerwagen vertikal oberhalb des Schleifringträgers angeordnet sein, kommen Mittel zur Erfassung einer horizontalen Auslenkung des Zugmittels zum Einsatz, um mit Hilfe einer Steuereinheit und mit Hilfe des Antriebs den Stromabnehmerwagen unmittelbar oberhalb des Schleifringträgers zu positionieren. Bei dem Messmittel handelt es sich insbesondere um einen nach unten offenen Umlenktrichter durch welchen das Zugmittel verläuft, wobei der Umlenktrichter pendelnd an dem Stromabnehmerwagen gelagert ist. Ein solcher Umlenktrichter kann auch in zwei Richtungen pendelnd aufgehängt sein, so dass bei Verfahren der Umschlagmaschine die Auslenkung in x- und y-Richtung, das heißt längs und quer zur Stromschiene erfasst werden kann. Über Winkelmesser kann die jeweilige Auslenkung detektiert werden und der Umlenktrichter mit dem Stromabnehmerwagen nachgeführt werden.

Wenn allerdings eine maximale Zugkraft überschritten oder eine zulässige Auslenkung des Zugmittels überschritten wird, können Not-Aus-Mittel die Energieversorgung unterbrechen, so dass die Auslenkung oder Zugkraft des Zugmittels durch Verlagern der Umschlagmaschine nicht weiter vergrößert werden kann.

Erfindungsgemäß ist vorgesehen, dass zur Vermeidung von ruckartigen Belastungen des Stromabnehmerwagens die Leitung in einer Leitungsschlaufe verlaufen kann und/oder ein Leitungsspeicher für die Leitung am Stromabnehmerwagen angeordnet ist. Hier können beispielsweise 500 mm zusätzliche Leitungen vorgehalten werden.

Als Zugmittel dient bevorzugt ein Seil, insbesondere aus Stahl mit einem Durchmesser von 8 bis 12 mm. Bei einer Anordnung des Stromabnehmerwagens senkrecht oberhalb des Schleifringträgers kann das Zugseil an dem Schleifringträger über ein Umlenkmittel, insbesondere eine Umlenkrolle geführt sein. Die Umlenkrolle hat eine horizontale Drehachse. Bewegt sich der obere Teil der Umschlagmaschine und damit der Stromabnehmer wird durch die Umlenkrolle sichergestellt, dass sich derjenige Teil des Schleifringträgers der mit der Leitung und mit dem Zugmittel gekoppelt ist, nicht mitdreht. Dadurch werden die Leitung und das Zugmittel vor Torsion geschützt und zwar unabhängig davon, wie viele Umdrehungen der Oberwagen und die Umschlagmaschine ausführen.

Bei üblichen Umschlagmaschinen ist es ausreichend, wenn die Nachführgeschwindigkeit einer angetriebenen Laufkatze oder des Stromabnehmerwagens 100 m/min. beträgt. Wichtig ist, dass das Zugmittel stetig unter Zugspannung gehalten wird und somit auch eine Zugentlastung der energieführenden Leitung gewährleistet. Bei erhöhtem Zug auf die Verbindungsleitung und des Zugmittels zwischen Umschlagmaschine und Oberwagen bzw. Laufkatze, z. B. bei einer Überschreitung der Toleranz oder einer Fehlfunktion, kann aus dem Leitungsspeicher ca. 0,5 m Leitung nachgezogen werden, bevor das Gerät die Umschlagmaschine in den Notausbetrieb schaltet.

Die erfindungsgemäße Energiezuführung sieht Endpuffer aus den Tragschienen vor, die je nach Größe und Reichweite der Umschlagmaschine den Arbeitsraum begrenzen.

Die Energiezuführung ist im Bereich des Schleifringträgers entkoppelbar, so dass die Umschlagmaschine zum Herausfahren aus dem Arbeitsraum mit einer manuellen, bodengeführten Leistungsverbindung gekoppelt werden kann. Dies ist allerdings ein Sonderbetrieb.

Die erfindungsgemäße Energiezuführung basiert auf der Verwendung eines Turms. Ein Turm im Sinne der Erfindung besitzt eine Spitze, an welcher der Schleifringträger angeordnet ist. Die Spitze des Turms befindet sich in erheblichem Abstand von der Oberseite des Oberwagens, d. h. in jedem Fall oberhalb einer Fahrerkabine des Oberwagens. Der Oberwagen ist drehbar an dem Fahrgestell der Umschlagmaschine angeordnet. In keinem Fall darf die Leitung oder das Zugmittel mit dem Oberwagen bzw. der Fahrerkabine kollidieren. Daher befindet sich der Schleifringträger an der Spitze des Turms, und zwar insbesondere in einem Abstand von mehr als 2 m von der Oberseite der Fahrerkabine. Bei Fahrerkabinen, die in der Höhe verstellbar sind, bezieht sich diese Angabe auf die Fahrerkabine in der niedrigsten Position. Bei Fahrerkabinen, die höhenverlagerbar am Oberwagen angeordnet sind, muss die Spitze des Turms auch dann noch oberhalb der Fahrerkabine angeordnet sein, wenn sich die Fahrerkabine in der höchsten Position befindet. Das vorher angegebene Maß von 2 m kann daher unterschritten werden, wenn die Fahrerkabine angehoben ist. Vorzugsweise ist der Turm jedoch mindestens doppelt so lang wie die Fahrerkabine hoch ist. Bei der Höhe einer Fahrerkabine von ca. 2,50 m ist der Turm mithin mindestens 5 m lang. Vorzugsweise besitzt der Turm eine Höhe von mindestens 6 m vom Boden gerechnet, auf dem die Umschlagmaschine fährt. Die Umschlagmaschine selbst sollte dabei eine Höhe von ca. 5,50 m im Bereich der Fahrerkabine nicht überschreiten. Diese Einschränkung in der Höhe bezieht sich nicht auf einen etwaigen Greifarm, der außerhalb der Energiezuführung agiert. Insbesondere, wenn die Energiezuführung senkrecht über dem Turm verläuft, spielt die Höhe eines Greifarms benachbart zum Turm keine Rolle, da es nicht zu einer Kollision mit der Energiezuführung kommen kann.

Die erfindungsgemäße Energiezuführung hat den wesentlichen Vorteil, dass keinerlei Gefahr besteht, dass Drittfahrzeuge die Energieversorgungsleitungen der leitunggebundenen elektrisch angetriebenen Umschlagmaschine gefährden können. Das Zugmittel und die Stromschienen können so ausgelegt werden, dass keinerlei Kollisionsgefahr mit dem Ausleger der Umschlagmaschine besteht, so dass der Fahrzeugführer wesentlich freier agieren kann, was die Arbeitsgeschwindigkeit und Effektivität erhöht und gleichsam unfallbedingte Arbeitsausfälle vermindert. Insgesamt wird der Betrieb einer Umschlagmaschine durch die erfindungsgemäße Energiezuführung signifikant vereinfacht.

Die Erfindung wird nachfolgend anhand von in den Zeichnungen dargestellten Ausführungsbeispielen erläutert. Es zeigen:
- Figur 1: eine Seitenansicht einer ersten Ausführungsform einer Energiezuführung;
- Figur 2: die Energiezuführung der Figur 1 in einer Ansicht von oben;
- Figur 3: eine weitere Ausführungsform einer Energiezuführung in einer Ansicht von oben;
- Figur 4: eine weitere Ausführungsform einer Energiezuführung in einer Seitensicht;
- Figur 5: in vergrößerter Darstellung eine Stromschiene;
- Figur 6: in vergrößerter Darstellung einen Teilbereich der Figur 4 im Bereich des Stromabnehmerwagens und
- Figur 7 und Figur 8: eine weitere Ausführungsform einer Energiezuführung in der Seitenansicht.

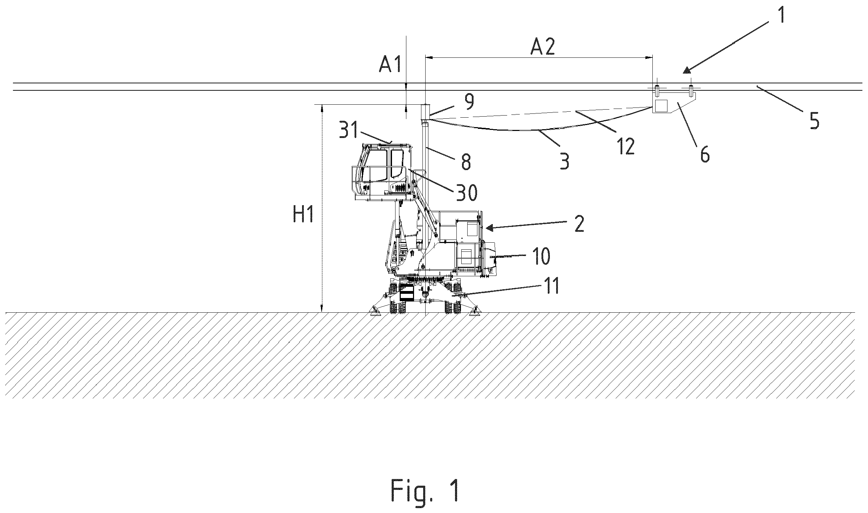

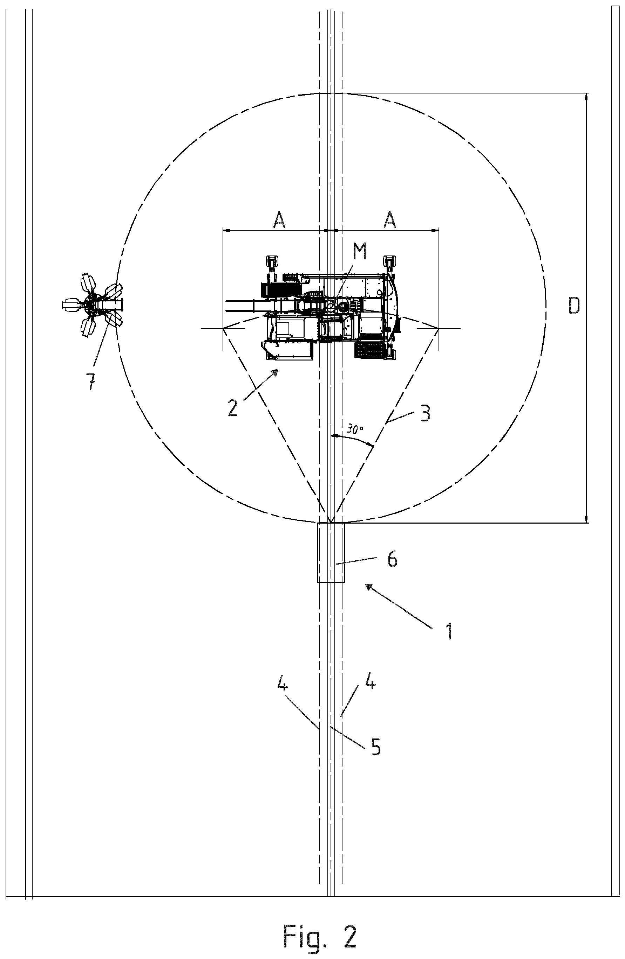

Figur 1 zeigt eine Energiezuführung 1 für eine Umschlagmaschine 2. Die Umschlagmaschine 2 wird elektrisch angetrieben, wobei sie ihre elektrische Energie über eine Leitung 3 aus einer Stromschiene 4 bezieht, wie sie in Figur 2 dargestellt ist. Figur 2 zeigt die Energiezuführung der Figur 1 in einer Ansicht von oben. Figur 2 zeigt, dass zwei Stromschienen 4 parallel zu einer Tragschiene 5 verlaufen. Die Tragschiene 5 befindet sich zwischen den beiden Stromschienen 4. An der Tragschiene 5 ist ein Stromabnehmerwagen 6 verfahrbar gelagert. Figur 2 zeigt, dass die Stromabnehmerschiene 6 sich zentral durch einen Arbeitsbereich der Umschlagmaschine 2 erstreckt. Die Umschlagmaschine 2 besitzt einen Greifer 7, der in nicht näher dargestellter Weise über einen Arm mit der Umschlagmaschine 2 verbunden ist. Die Umschlagmaschine 2 selbst ist verfahrbar. Sie kann sich längs der Tragschiene 5 bewegen, aber auch beispielsweise um einen Winkel von +/- 30° seitlich der Tragschiene 5 verfahren. Dies kann z. B. einer seitlichen Auslenkung A von jeweils 4 m entsprechen. Der Stromabnehmerwagen 6 befindet sich bei diesem Ausführungsbeispiel 8 m von der Umschlagmaschine 2 entfernt, so dass sich ein Durchmesserbereich D von 16 m um den Mittelpunkt der Umschlagmaschine 2 herum ergibt. Der Mittelpunkt der Umschlagmaschine 2 ist gleichzeitig ihr Drehpunkt M. In diesem Drehpunkt M ist ein Turm 8 (Figur 1) angeordnet, an dessen oberer Spitze ein Schleifringträger 9 angeordnet ist. Der Schleifringträger 9 gleicht die Drehbewegungen des Turmes 8, der sich mit dem Oberwagen 10 relativ zum Fahrgestell 11 der Umschlagmaschine 2 dreht, aus. Figur 1 zeigt, dass der Schleifringträger 9 zusätzlich über ein Zugmittel 12 mit dem Stromabnehmerwagen 6 verbunden ist. Das Zugmittel 12 ist insbesondere ein Stahlseil mit einer Stärke zwischen 8 und 12 mm. Das Zugmittel 12 soll ständig einer Zugspannung ausgesetzt sein, damit die stromführende Leitung 3 nicht belastet wird. Figur 1 zeigt, dass das Zugmittel 12 nahezu horizontal (<5°) verläuft, weil der Abstand A1 zwischen dem Schleifringträger 9 und der Tragschiene 5 wesentlich kleiner ist als der horizontale Abstand A2 des Stromabnehmerwagens 6 von dem Schleifringträger 9. Das Verhältnis ist insbesondere größer als 1:10, insbesondere größer als 1:15.

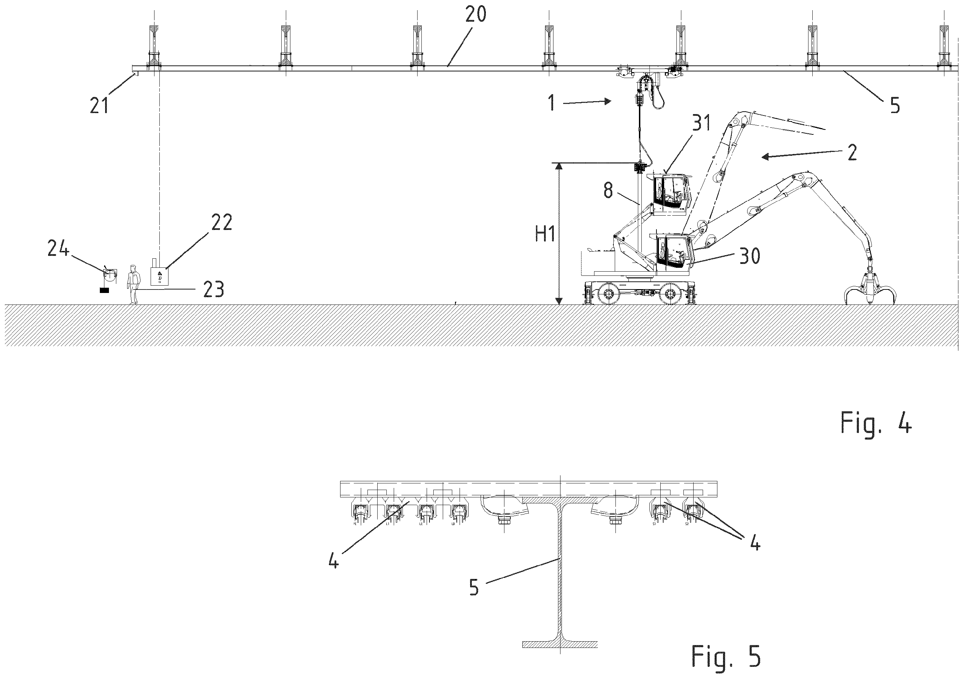

Der Turm 8 besitzt in diesem Ausführungsbeispiel eine Höhe von ca. 7 bis 7,5 m und befindet sich daher mit seiner oberen Spitze in einem Abstand von ca. 0,5 m von dem darüber verlaufenden Schienensystem. Der Turm 8 befindet sich daher immer oberhalb einer Oberseite 31 einer Fahrerkabine 30. Figur 4 zeigt, dass die Fahrerkabine 30 zwischen einer abgesenkten und einer angehobenen Position höhenverlagerbar ist. Der Turm 8 in Figur 4 ist etwas kürzer, allerdings mit einer Länge von ca. 6 m immer noch mit seiner Oberspitze oberhalb der Oberseite 31 der Fahrerkabine 30 gelegen, wenn sich diese in angehobener Position befindet. Der Turm 8 besitzt vom Boden gemessen eine Höhe von mindestens 6 m bzw. einen Abstand von mehr als 2 m von der Oberseite 31 der Fahrerkabine 30 in der niedrigsten Position.

In nicht näher dargestellter Weise besitzt der Stromabnehmerwagen 6 der Figur 1 einen elektrischen Antrieb und eine Steuereinheit mit einem Stoppmotor, welche dafür vorgesehen ist, den Stromabnehmerwagen 6 so zu positionieren, dass das Zugmittel 12 unter Spannung bleibt und in der Weise nachzuführt, dass das Zugmittel auch beim Verlagern des Stromabnehmerwagens 6 die gewünschte Spannung aufrecht erhält.

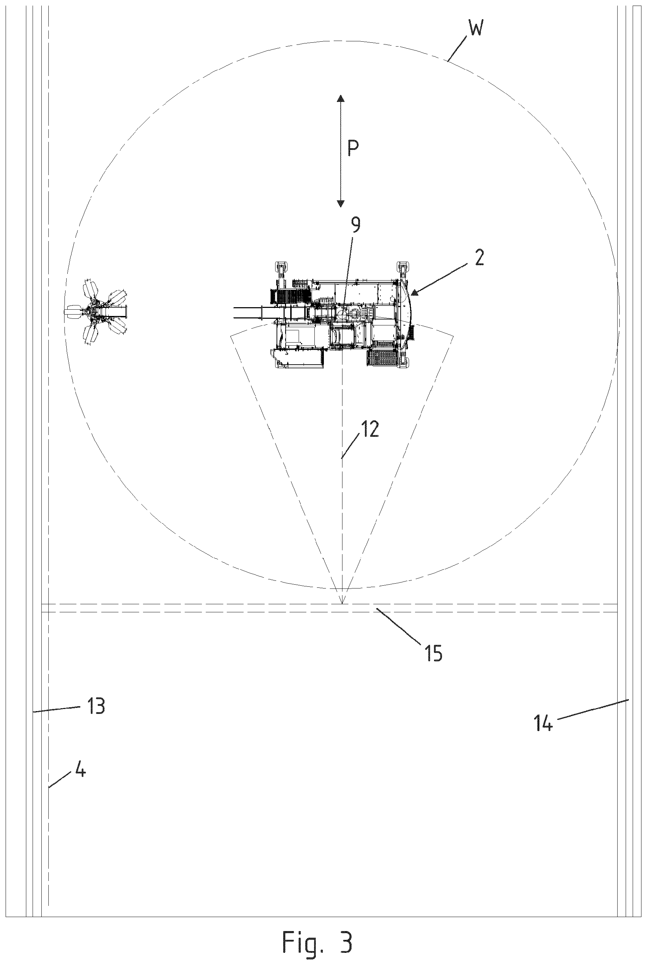

Das Ausführungsbeispiel der Figur 3 unterscheidet sich von demjenigen der Figuren 1 und 2 dadurch, dass keine zentrale Stromschiene 4 und auch keine zentrale Tragschiene 5 vorgesehen ist. Stattdessen gibt es zwei parallel verlaufende und im großen Abstand zueinander angeordnete Tragschienen 13, 14 die über eine Brücke 15 miteinander verbunden sind. Die Brücke 15 ist in ihrem mittleren Bereich mit dem Zugmittel 12 verbunden, das mit seinem anderen Ende wiederrum mit einem Schleifringträger 9 der Umschlagmaschine 2 gekoppelt ist. Der Wirkungsbereich W der Umschlagmaschine 2 an der dargestellten Position ist durch einen Kreis gekennzeichnet. Bei diesem Ausführungsbeispiel wird der Stromabnehmerwagen 6 an den Tragschienen 13 und 14 geführt, wobei die Stromschiene 4 nur im Bereich einer der beiden Tragschienen 13 erforderlich ist. Die Brücke 15 ist gewissermaßen Bestandteil des Stromabnehmerwagens 6. Diese Konfiguration hat den Vorteil, dass in dem der Brücke 15 abgewandten Bereich der Umschlagmaschine, das heißt in der oberen Bildhälfte der Figur 3, keine Stromschienen direkt über der Umschlagmaschine montiert sein müssen, so dass sich die stromführenden Teile aber auch die Tragschienen komplett außerhalb des Wirkungsbereichs W der Umschlagmaschine 2 befinden. Der Pfeil P zeigt die Hauptbewegungsrichtung der Umschlagmaschine 2 an.

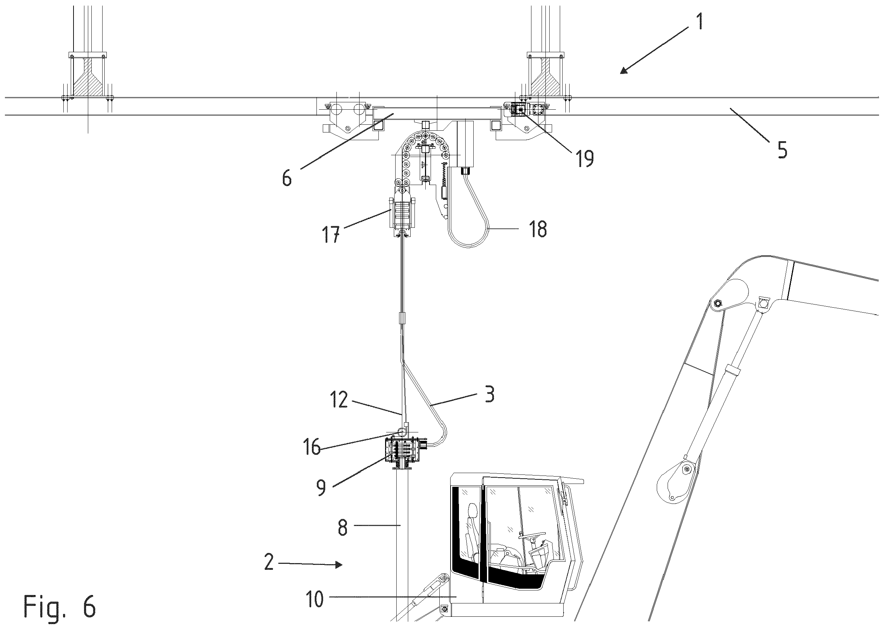

Figur 4 zeigt in einer Seitenansicht eine weitere Ausgestaltung der erfindungsgemäßen Energiezuführung 1. Figur 6 zeigt in vergrößerter Darstellung die Verbindung der Energiezuführung 1 mit der Umschlagmaschine 2. Im Unterschied zu dem ersten Ausführungsbeispiel befindet sich der Stromabnehmerwagen 6 nicht im Nachlauf zur Umschlagmaschine 2, sondern unmittelbar oberhalb, das heißt vertikal über der Umschlagmaschine 2. In der dargestellten Position befindet er sich senkrecht oberhalb des Schleifringträgers 9 am Turm 8 des Oberwangens 10. Das Zugmittel 12 ist ein Seil, das über eine Umlenkrolle 16, die am Schleifringträger 9 gelagert ist, geführt ist. Dreht sich der Turm 8, bewirkt das vorgespannte Zugmittel 12, dass sich der mit der Leitung 3 verbundene Teil des Schleifringträgers 9 nicht mitdreht.

Die Leitung 3 und das Zugmittel 12 sind durch ein Mittel zur Erfassung einer horizontalen Auslenkung geführt, das bei dieser Ausführungsform die Gestalt eines Umlenktrichters 17 hat, der pendelnd an dem Stromabnehmerwagen 6 gelagert ist. Am Stromabnehmerwagen 6 befindet sich zudem ein Leitungsspeicher 18 mit einer zusätzlichen Leitungslänge von ca. 500 mm.

Der Umlenktrichter 17 ist in nicht näher dargestellter Weise mit Messmitteln verbunden. Wird die Umschlagmaschine 2 verlagert, erfassen diese Messmittel die Auslenkung des Umlenktrichters 17, so dass ein Antrieb des Stromabnehmerwagens 6 entlang der Tragschiene 5 so verlagert wird, dass der Stromabnehmerwagen 6 wieder unmittelbar oberhalb des Schleifringträgers 9 angeordnet ist. Es wird nachgeführt.

Figur 5 zeigt in vergrößerter Darstellung die Tragschiene 5 in Form eines Doppel-T-Profils und die beiderseits der Tragschiene 5 angeordneten Stromschienen 4 zur Energieübertragung auf den in dieser Zeichnung nicht dargestellten Stromabnehmerwagen.

Figur 4 zeigt, dass an deckenseitigen Trägern 20 die Tragschiene 5 befestigt ist. Zusätzlich ist an der Tragschiene 5 ein Endanschlag 21 angeordnet. Ein Not-Aus-Schalter 22 kann durch einen Bediener 23 jederzeit betätigt werden und die Energiezuführung 1 unterbrechen. Eine manuelle kabelgebundene Energiezuführung 1 ermöglicht es, die Umschlagmaschine 2 auch dann mit Energie zu versorgen, wenn sie aus dem vorgegebenen Arbeitsraum herausgefahren werden soll, z. B. für Wartungszwecke.

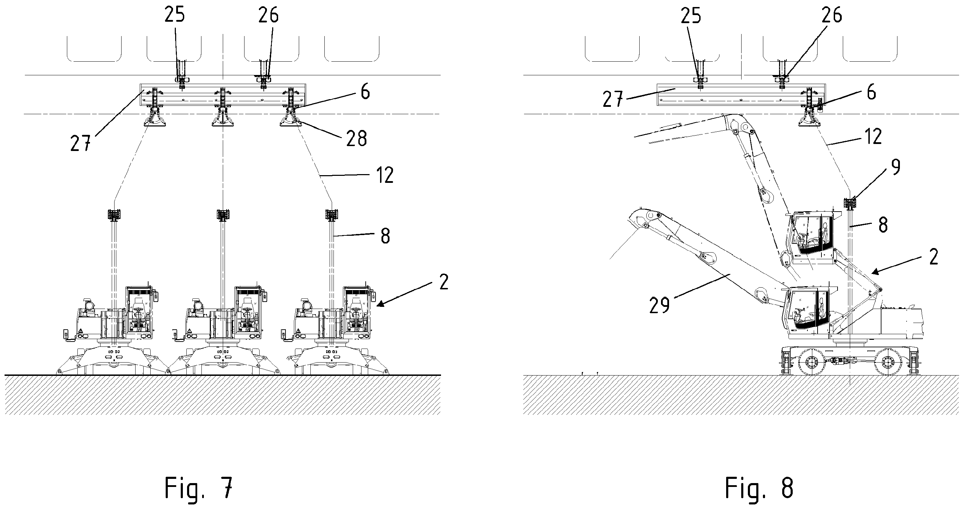

Die Figuren 7 und 8 zeigen ein weiteres Ausführungsbeispiel der Erfindung. Es sind deckenseitig zwei Längsschienen 25, 26 angeordnet, wobei eine Tragschiene 27 quer zu den Längsschienen 25, 26 angeordnet ist. An der Tragschiene 27 ist ein Stromabnehmerwagen 6 mit einem Umlenktrichter 28 angeordnet, wobei der Umlenktrichter dazu ausgelegt ist, die Bewegung des Zugmittels 12 sowohl in Längsrichtung der Tragschiene 5 als auch in Längsrichtung der Längsschienen 25, 26, das heißt in x- und -Richtung, zu detektieren.

Figur 7 zeigt, dass die Umschlagmaschine 2 dadurch relativ weit aus der dargestellten Mittelposition in die seitlichen Positionen zu den Enden der Tragschiene 27 hin verlagert werden kann. Die in Figur 7 rechte Position ist in Figur 8 nochmals dargestellt, wobei die Umschlagmaschine 2 um 90° verschwenkt ist. Es ist zu erkennen, dass der Ausleger 29 der Umschlagmaschine 2 in angehobener Position nicht mit dem Stromabnehmerwagen 6 oder den darüber angeordneten Komponenten der Energiezuführung kollidieren kann. Der Umlenktrichter 28 ist wiederum Bestandteil von Mitteln zur Erfassung einer horizontalen Auslenkung des Zugmittels 12. Diese sind steuerungstechnisch mit Antrieben des Stromabnehmerwagens 6 verbunden sowie mit einer angetriebenen Laufkatze über welche die Tragschiene 27 in Längsrichtung der Längsschienen 25, 26 verlagerbar ist. Dadurch kann der Stromabnehmerwagen 6 soweit es die Länge der Tragschiene 27 bzw. die Längsschienen 25, 26 zulassen, möglichst unmittelbar oberhalb des Schleifringträgers 9 am Turm 8 positioniert werden. Die Figuren 7 und 8 zeigen aber auch, dass bestimmte Abweichungen in den äußeren Endlagen tolerierbar sind, so dass der Stromabnehmerwagen 6 nicht bei der kleinsten Ablenkung des Zugmittels 12 bereits nachgeführt werden muss. Figur 8 zeigt die äußere Endlage für die Umschlagmaschine 2.

### Bezugszeichen:

- 1 -: Energiezuführung
- 2 -: Umschlagmaschine
- 3 -: Leitung
- 4 -: Stromschiene
- 5 -: Tragschiene
- 6 -: Stromabnehmerwagen
- 7 -: Greifer
- 8 -: Turm
- 9 -: Schleifringträger
- 10 -: Oberwagen
- 11 -: Fahrgestell
- 12 -: Zugmittel
- 13 -: Tragschiene
- 14 -: Tragschiene
- 15 -: Brücke
- 16 -: Umlenkrolle
- 17 -: Umlenktrichter
- 18 -: Leitungsspeicher
- 19 -: Antrieb
- 20 -: Träger
- 21 -: Endanschlag
- 22 -: Not-Aus-Schalter
- 23 -: Bediener
- 24 -: manuelle Energiezuführung
- 25 -: Längsschiene
- 26 -: Längsschiene
- 27 -: Tragschiene
- 28 -: Umlenktrichter
- 29 -: Ausleger

- 30 -: Fahrerkabine
- 31 -: Oberseite von 30

- A -: Abstand
- A1 -: Abstand
- A2 -: Abstand
- D -: Durchmesser
- H1 -: Höhe Turm
- M -: Mittelpunkt
- P -: Pfeil
- W -: Wirkungsbereich

## Patentansprüche

1. Energiezuführung für eine elektrisch angetriebene, leitunggebundene Umschlagmaschine (2) mit folgenden Merkmalen:
a. Die Energiezuführung (1) ist dafür ausgebildet, oberhalb einer Umschlagmaschine (2) montiert zu werden;
b. Die Energiezuführung (1) umfasst wenigstens eine Stromschiene (4) und einen entlang der Stromschiene (4) verfahrbaren Stromabnehmerwagen (6), der so angeordnet und dazu ausgebildet ist, dass er einer örtlichen Verlagerung der Umschlagmaschine (2) folgen kann;
c. Der Stromabnehmerwagen (6) ist über eine Leitung (3) und ein Zugmittel (12) mit einem Schleifringträger (9) verbunden, wobei der Schleifringträger (9) dafür vorgesehen ist, an der Umschlagmaschine (2) befestigt zu werden, um die Umschlagmaschine (2) mit Energie aus der Stromschiene (4) zu versorgen;
d. Der Stromabnehmerwagen (6) besitzt einen Antrieb (19), der dafür vorgesehen ist, den Stromabnehmerwagen (6) zu verlagern,
i. bei Unterschreiten eines unteren Grenzwertes einer Zugkraft an dem Zugmittel (12) und bei Überschreiten eines oberen Grenzwertes der Zugkraft an dem Zugmittel (12)
ii. oder bei Überschreiten einer horizontalen Auslenkung des Zugmittels (12);
e. Der Schleifringträger (9) ist an einem Turm (8) an einem Oberwagen (10) der Umschlagmaschine (2) befestigt, wobei der Oberwagen (10) der Umschlagmaschine (2) drehbar an einem Fahrgestell (11) der Umschlagmaschine (2) angeordnet ist.

2. Energiezuführung nach Anspruch 1, **dadurch gekennzeichnet, dass** der Stromabnehmerwagen (6) an einer Tragschiene (5, 27) geführt ist, die parallel zu der wenigstens einen Stromschiene (4) verläuft.

3. Energiezuführung nach Anspruch 1 oder 2, **dadurch gekennzeichnet, dass** das Zugmittel (12) um ein mehrfaches länger ist als der kleinste Abstand (A1) der Schleifringträgers (9) von der Stromschiene (4), so dass der Stromabnehmerwagen (6) in jeder Betriebsposition in horizontalem Abstand von dem Schleifringträger (9) angeordnet ist.

4. Energiezuführung nach Anspruch 1 oder 2, **dadurch gekennzeichnet, dass** am Stromabnehmerwagen (6) Mittel zur Erfassung einer horizontalen Auslenkung des Zugmittels (12) angeordnet sind, um mit Hilfe einer Steuereinheit und des Antriebs (19) den Stromabnehmerwagen (6) unmittelbar oberhalb des Schleifringträgers (9) zu positionieren.

5. Energiezuführung nach einem der Ansprüche 1 bis 4, **dadurch gekennzeichnet, dass** an dem Stromabnehmerwagen (6) ein Leitungsspeicher (18) für die Leitung (3) angeordnet ist.

6. Energiezuführung nach einem der Ansprüche 1 bis 5, **dadurch gekennzeichnet, dass** an dem Schleifringträger (9) eine Umlenkeinrichtung (16) für das Zugmittel (12) angeordnet ist.

7. Energiezuführung nach einem der Ansprüche 4 bis 6, **dadurch gekennzeichnet, dass** das Mittel zur Erfassung einer horizontalen Auslenkung einen nach unten offenen Umlenktrichter (17, 18) umfasst, durch welchen das Zugmittel (12) verläuft und der pendelnd an dem Stromabnehmerwagen (6) gelagert ist.

8. Energiezuführung nach einem der Ansprüche 1 bis 7, **dadurch gekennzeichnet, dass** die Tragschiene (27) für den Stromabnehmerwagen (6) quer zu Längsschienen (25, 26) verläuft, entlang welcher die Tragschiene (27) zusammen mit dem Stromabnehmerwagen (6) durch wenigstens eine angetriebene Laufkatze verlagerbar ist.

9. Energiezuführung nach Anspruch 7 oder 8, **dadurch gekennzeichnet, dass** der Umlenktrichter (28) Mittel zur Erfassung horizontaler Verlagerungen des Zugmittels (12) in x- und y-Richtung umfasst.

10. Energiezuführung nach einem der Ansprüche 1 bis 9, umfassend Mittel zum Unterbrechen der Energieversorgung bei Überschreiten einer maximalen Zugkraft oder Auslenkung des Zugmittels (12).

11. Energiezuführung nach einem der Ansprüche 1 bis 10, **dadurch gekennzeichnet, dass** eine Fahrerkabine (30) der Umschlagmaschine (2) höhenverlagerbar am Oberwagen (10) angeordnet ist, wobei eine Spitze des Turmes (8) höher angeordnet ist als eine Oberseite (31) der Fahrerkabine (30) in ihrer höchsten Position.

12. Energiezuführung nach Anspruch 11, **dadurch gekennzeichnet, dass** der Turm (8) mindestens doppelt so lang ist wie die Fahrerkabine (30) hoch ist.

13. Energiezuführung nach Anspruch 11 oder 12, **dadurch gekennzeichnet, dass** der Schleifringträger (9) an der Spitze des Turms (8) in einem Abstand von mehr als 2 m von der Oberseite (31) der Fahrerkabine (30) in der niedrigsten Position angeordnet ist.

14. Energiezuführung nach einem der Ansprüche 1 bis 13, **dadurch gekennzeichnet, dass** der Turm (8) eine Höhe (H1) von mindestens 6 m hat.
